# DEMANDE DE BREVET EUROPEEN

(11) **EP 4 386 494 A1**
(43) Date de publication de la demande: **19.06.2024**
(21) Numéro de dépôt: 22213672.3
(22) Date de dépôt: 15.12.2022
(51) Int. Cl.: G04R 60/00, G04G 17/06, G04G 21/04, G04D 1/02

(54) **MONTRE CONNECTEE COMPORTANT UN DISPOSITIF DE MISE A LA MASSE COMMUNE D'UN MOUVEMENT D'HORLOGERIE**

(71) Demandeur: ETA SA Manufacture Horlogère Suisse, 2540 Grenchen (CH)
(72) Inventeur: BALMER, Raphaël, 2824 Vicques (CH)
(74) Mandataire: ICB SA

(57) **Abrégé**

Un aspect de l'invention concerne une montre connectée (1) comportant une boîte (100) présentant une carrure (110), un mouvement horloger (10) logé dans un espace interne (115) délimité par ladite carrure (110), ledit mouvement horloger (10) comportant une unité de traitement (13) et un module de communication (12) reliés électriquement à des connecteurs électriques (18) que comporte le mouvement horloger (10), ladite montre connectée (1) étant caractérisée en ce qu'elle comporte un dispositif de mise à la masse commune formé par une bague élastique conductrice (200) comportant un corps annulaire (205) d'axe central (Z), des languettes de fixation (210) portées par ledit corps annulaire (205) et coopérant avec ladite carrure (110) pour former un système de verrouillage à baïonnette (300) par rotation relative de la bague élastique conductrice (200) par rapport à la carrure (110), autour de l'axe central (Z), entre une position d'insertion et une position verrouillée, et en ce que ladite bague élastique conductrice (200) comporte des pattes conductrices (250) configurées pour être en contact électrique avec les conducteurs électriques (18) du mouvement horloger (10) lorsque la bague élastique conductrice (200) est en position verrouillée dans la carrure (110).

## Description

### Domaine technique de l'invention

L'invention concerne une montre connectée comportant un mouvement horloger électronique ou électromécanique présentant des organes électriques ou électroniques nécessitant une mise à la masse commune.

### Arrière-plan technologique

Les mouvements horlogers des montres connectées peuvent présenter des organes électriques ou électroniques nécessitant une mise à un potentiel commun.

La mise à un potentiel commun de tels organes électriques est classiquement réalisée avec des bornes de mise à la masse pouvant être sous la forme d'une languette d'un circuit imprimé flexible relié au mouvement.

Toutefois, cela n'est pas toujours suffisant, notamment lorsque le mouvement horloger intègre un module de communication, par exemple de type antenne Bluetooth^{®}.

La mise à un potentiel commun d'un tel module de communication nécessite la multiplication des connecteurs, ce qui complexifie la mise en oeuvre en raison des nombreuses pièces, l'opération d'emboitage du mouvement et de mise à la masse notamment par les différentes manipulations requises pour le placement des différents connecteurs. Ainsi, la productivité d'une telle solution de mise à un potentiel commun est grandement affectée.

De plus, cette opération de mise à un potentiel commun est généralement réalisée lors de l'emboitage du mouvement dans la boîte de la montre connectée.

L'emboitage d'un tel mouvement horloger de montre connectée, c'est-à-dire la fixation du mouvement dans la boîte, est également souvent réalisé au moyen de nombreuses brides de fixation qui viennent s'insérer dans des rainures prévues sur la circonférence interne de la boîte, l'ensemble étant solidarisé par des vis de bride.

Par conséquent, cette opération d'emboitage dans son ensemble est une opération longue et complexe à mettre oeuvre en raison des nombreuses pièces (connecteurs, brides, vis, ...), et des différentes manipulations requises pour le placement des connecteurs, des brides et des vis, ce qui affecte grandement la productivité d'une telle solution d'emboitage et de mise à un potentiel commun d'un mouvement d'horlogerie de montre connectée.

Par conséquent, il existe un besoin pour améliorer les dispositifs de mise à un potentiel commun d'un mouvement d'horlogerie électronique ou électromécanique d'une montre connectée, notamment pour améliorer l'opération globale d'emboitage.

### Résumé de l'invention

A cette fin, l'invention vise à proposer une montre connectée comportant un mouvement d'horlogerie électronique ou électromécanique et un dispositif de mise à la masse commune d'organes électriques d'un tel mouvement permettant de résoudre au moins un des inconvénients précités.

Selon l'invention, un tel dispositif de mise à la masse commune se présente sous la forme d'une bague élastique conductrice permettant de connecter rapidement différents organes électriques d'un mouvement d'horlogerie électronique ou électromécanique. Une telle bague élastique conductrice selon l'invention permet de s'affranchir de l'utilisation d'une multitude de connecteurs.

Dans ce contexte, l'invention concerne une montre connectée comportant une boîte présentant une carrure, un mouvement horloger logé dans un espace interne délimité par ladite carrure, ledit mouvement horloger comportant une unité de traitement et un module de communication reliés électriquement à des connecteurs électriques que comporte le mouvement horloger.

La montre connectée comporte en outre un dispositif de mise à la masse commune formé par une bague élastique conductrice comportant un corps annulaire d'axe central Z, des languettes de fixation portées par ledit corps annulaire et coopérant avec ladite carrure pour former un système de verrouillage à baïonnette par rotation relative de la bague élastique conductrice par rapport à la carrure, autour de l'axe central Z, entre une position d'insertion et une position verrouillée, et en ce que ladite bague élastique conductrice comporte des pattes conductrices configurées pour être en contact électrique avec les conducteurs électriques du mouvement horloger lorsque la bague élastique conductrice est en position verrouillée dans la carrure.

Préférentiellement, les pattes conductrices sont des pattes élastiques. Ainsi, le dispositif de mise à la masse commune selon l'invention permet également d'apporter une solution d'amortissement élastique du mouvement d'horlogerie en cas de choc sur la boîte de montre.

Le dispositif de mise à la masse commune selon l'invention permet également d'apporter une solution d'emboitage du mouvement horloger dans la boîte de montre, permettant de s'affranchir de l'utilisation d'une multitude de brides de maintien et de vis de serrage de bride, et permet ainsi de s'affranchir des nombreuses manipulations requises pour les vis et les brides.

Outre les caractéristiques évoquées dans les paragraphes précédents, la montre connectée selon l'invention peut présenter une ou plusieurs caractéristiques complémentaires parmi les suivantes, considérées individuellement ou selon toutes les combinaisons techniquement possibles :
- les conducteurs électriques sont des pistes électriques ménagées en surface dudit mouvement horloger et en ce que les pattes conductrices de la bague élastique conductrice sont en appui sur les pistes électriques lorsque la bague élastique conductrice est en position verrouillée dans la carrure ;
- les pattes conductrices sont des pattes conductrices élastiques ;
- les pattes conductrices sont configurées pour exercer un effort axial parallèlement à l'axe central Z sur le mouvement horloger par déformation élastique des pattes élastiques conductrices au moins lorsque ladite bague élastique d'emboitage est en position verrouillée dans la carrure ;
- lesdites pattes conductrices sont configurées pour que l'effort axial exercé sur le mouvement horloger assure un maintien dudit mouvement horloger dans ladite carrure ; préférentiellement selon une direction axiale parallèle à l'axe central Z ;
- lesdites pattes conductrices sont configurées pour former des moyens amortisseurs du mouvement horloger en cas de chocs subis par la montre connectée ; préférentiellement selon une direction axiale parallèle à l'axe central Z ;
- les languettes de fixation s'étendent radialement par rapport à l'axe central Z ;
- chacune desdites pattes conductrices comporte une portion élastique reliée au corps annulaire et est conformée pour se déformer élastiquement ;
- ladite portion élastique comporte une extrémité libre de contact présentant au moins une portion décalée axialement, selon l'axe central Z, par rapport au corps annulaire, ladite extrémité libre de contact étant en contact électrique avec un des conducteurs électriques du mouvement horloger, lorsque ladite bague élastique conductrice est en position verrouillée dans la carrure ;
- la bague élastique conductrice comporte un organe de verrouillage angulaire coopérant avec un doigt élastique de verrouillage porté par le mouvement horloger ou par la carrure, pour assurer un verrouillage en rotation de ladite bague élastique conductrice une fois en position verrouillée par clippage ou verrouillage élastique ;
- l'organe de verrouillage angulaire coopère avec une surface de butée du mouvement horloger ou de la carrure pour former une butée angulaire de positionnement de la bague élastique conductrice ;
- la carrure comporte une surface d'appui pour recevoir en appui lesdites languettes de fixation de la bague élastique conductrice ;
- la carrure comporte des rainures à baïonnette, lesdites rainures à baïonnette coopérant avec lesdites languettes de fixation pour former le système de verrouillage à baïonnette ;
- ladite bague élastique conductrice comporte un détrompeur de montage ;
- ladite bague élastique conductrice comporte au moins une empreinte présentant une forme adaptée pour coopérer avec un outil de montage ;
- ladite bague élastique conductrice comporte une première empreinte configurée pour assurer la rotation de la bague élastique conductrice et une deuxième empreinte configurée pour assurer le déverrouillage de ladite bague élastique conductrice, chacune des empreintes présentant une forme adaptée pour coopérer avec un outil de montage ;
- la bague élastique conductrice est réalisée en matière métallique ou en matière polymère avec une charge conductrice.

L'invention concerne également un outil de montage pour la mise à la masse commune d'un mouvement d'horlogerie d'une montre connectée selon l'invention.

L'outil de montage comporte au moins un élément en saillie configuré pour coopérer avec au moins une empreinte de la bague élastique conductrice.

Préférentiellement, l'outil de montage comporte des éléments en saillie configurés pour coopérer avec une pluralité d'empreintes de ladite bague élastique conductrice, lesdits éléments en saillie assurant un entrainement en rotation de ladite bague élastique conductrice lors de la rotation dudit outil de montage par un opérateur, un automate ou un robot.

Avantageusement, l'outil de montage comporte un téton de déverrouillage configuré pour débrayer ledit doigt élastique de verrouillage lorsque ledit outil de montage est en position sur la bague élastique conductrice de manière à autoriser son déverrouillage dudit mouvement horloger.

L'invention concerne également un procédé de mise à la masse commune d'un mouvement horloger électronique ou électromécanique d'une montre connectée selon l'invention.

Le procédé de mise à la masse commune selon l'invention comporte :
- une étape d'introduction dudit mouvement horloger dans la carrure de la boîte ;
- une étape d'introduction du dispositif de mise à la masse commune, formé par ladite bague élastique conductrice, par-dessus le mouvement d'horlogerie
- une étape de mise à la masse commune des connecteurs électriques du mouvement horloger durant laquelle la bague élastique conductrice est engagée en rotation autour de l'axe central Z jusqu'à atteindre une position verrouillée, la rotation engageant lesdites languettes de fixation dans une pluralité de rainures à baïonnette que comporte la carrure, lesdites pattes conductrices venant en contact électrique avec les conducteurs électriques du mouvement horloger lorsque la bague élastique conductrice est en position verrouillée.

Préférentiellement, lors de l'étape d'introduction du dispositif de mise à la masse commune, formé par ladite bague élastique conductrice, les languettes de fixation de ladite bague élastique conductrice viennent en appui sur une surface d'appui de ladite carrure.

Préférentiellement, l'étape de mise à la masse commune permet de réaliser un emboitage du mouvement horloger dans ladite boîte de montre et son maintien dans ladite boîte de montre.

Préférentiellement, l'étape de mise à la masse commune des connecteurs électriques du mouvement horloger est réalisée avec un outil de montage comportant au moins un élément en saillie coopérant avec au moins une empreinte de ladite bague élastique conductrice pour engager en rotation la bague élastique conductrice lors de la rotation de l'outil de montage par un opérateur, un automate ou un robot.

Le procédé de mise à la masse commune peut être un procédé manuel, c'est-à-dire réalisé par une personne physique ou un procédé automatisé.

### Brève description des figures

Les buts, avantages et caractéristiques de la présente invention apparaîtront à la lecture de la description détaillée ci-dessous faisant référence aux figures suivantes :
- la figure 1 est une vue semi-éclatée en perspective d'une montre connectée selon l'invention comportant une boîte présentant une carrure, un mouvement horloger monté dans la carrure et un dispositif de mise à la masse commune pour assurer la mise à la masse du mouvement horloger ;
- la figure 2 est une vue de dessus de la montre connectée selon l'invention illustrée à la figure 1 ; la figure 2 illustrant particulièrement le dispositif de mise à la masse commune dans sa position d'insertion ;
- la figure 3 est une vue de dessus de la montre connectée selon l'invention illustrée à la figure 1, la figure 3 illustrant particulièrement le dispositif de mise à la masse commune dans sa position verrouillée dans la carrure ;
- la figure 4 est en vue en coupe transversale de la carrure selon l'invention au niveau d'une rainure à baïonnette ;
- la figure 5 est une vue de détail du dispositif de mise à la masse commune selon l'invention illustrant plus particulièrement un organe de verrouillage angulaire du dispositif de mise à la masse commune ;
- la figure 6 est une vue de détail du dispositif de mise à la mase commune selon l'invention illustrant plus particulièrement une patte élastique de contact électrique ;
- la figure 7 est une représentation schématique d'un outil de montage/démontage pour la mise à la masse commune d'un mouvement horlogerie au moyen du dispositif de mise à la masse commune l'invention.

Dans toutes les figures, les éléments communs portent les mêmes numéros de référence sauf précision contraire.

### Description détaillée de l'invention

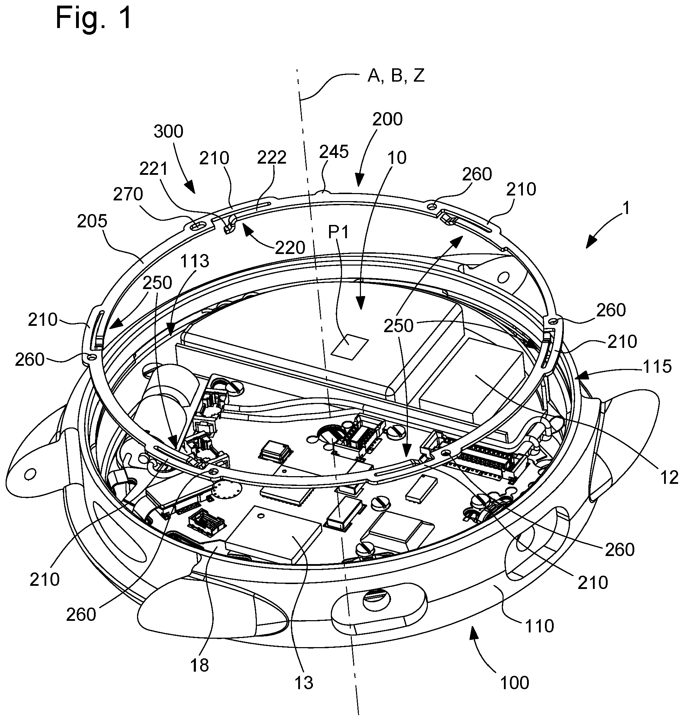

La figure 1 est une vue éclatée en perspective d'une montre connectée 1 selon l'invention comportant une boîte 100 d'axe central B présentant une carrure 110 configurée pour être fermée de part et d'autre par un fond de boîte (non représenté) et par une glace (non représentée).

La montre connectée 1 comporte un mouvement horloger 10 logé dans l'espace interne 115 délimité par la carrure 110.

Par exemple, la carrure 110 est en matière métallique, céramique, en matière polymère ou encore un mixte de différentes matières.

Le mouvement horloger 10 peut être un mouvement électronique ou électromécanique.

Le mouvement horloger 10 présente un axe central A perpendiculaire à un plan général P1. Le plan général P1 du mouvement d'horlogerie 10 est parallèle au plan des aiguilles (non représentées). L'axe central A du mouvement d'horlogerie 10 est parallèle ou correspond à l'axe de rotation des aiguilles du mouvement.

L'axe central A du mouvement d'horlogerie 10 est parallèle ou correspond à l'axe central B de la carrure 110.

Préférentiellement, le mouvement horloger 10 comporte un module horaire, une unité de traitement 13 et un module de communication 12, par exemple une antenne de type Bluetooth^{®}.

Un tel module de communication 12 nécessite d'avoir un de ses potentiels fixe. Il est donc nécessaire de coupler de manière conductrice un des potentiels du module de communication 12 à un dispositif de mise à la masse commune.

Bien entendu, d'autres organes électriques ou électroniques que comporte le mouvement horloger 10 peuvent également nécessiter une mise à la masse commune.

L'unité de traitement 13 et le module de communication 12 présentent un potentiel relié électriquement à au moins un connecteur électrique 18 que comporte le mouvement horloger 10.

Préférentiellement, le mouvement horloger 10 comporte une pluralité de connecteurs électriques 18 ménagés à la surface du mouvement horloger 10.

Préférentiellement, les connecteurs électriques 18 sont répartis en périphérie du mouvement horloger 10, c'est-à-dire dans une région radialement éloignée de l'axe central A.

Dans l'exemple de réalisation illustré, la mise à la masse commune (ou potentiel commun) du mouvement horloger 10 est réalisé côté fond de boîte. Bien entendu, une mise à la masse commune du mouvement horloger 10 côté glace est également possible sans sortir du contexte de l'invention.

L'objectif principal de l'invention est de proposer un dispositif de mise à la masse commune permettant faciliter cette opération de mise à la masse commune des divers organes électriques ou électroniques du mouvement horloger 10 lors du montage du mouvement horloger 10 dans la boîte 100.

Le dispositif de mise à la masse commune selon l'invention permet également de simplifier la fixation du mouvement horloger 10 à la carrure 110 lors de l'opération d'emboitage, notamment par la suppression de l'utilisation d'une pluralité de brides et de vis.

Le dispositif de mise à la masse commune selon l'invention comporte avantageusement des moyens pour assurer la fixation, la sécurisation et le verrouillage du mouvement horloger 10 dans la boîte 100. Ainsi, le dispositif de mise à la masse commune peut également remplacer un dispositif d'emboitage d'un mouvement horloger.

Ainsi, grâce à un tel dispositif de mise à la masse commune selon l'invention, l'étape de mise à la masse commune du mouvement horloger 10 et l'étape de fixation du mouvement horloger 10 dans la carrure 110 sont réalisées simultanément en une seule opération de verrouillage du dispositif de mise à la masse commune.

Selon l'invention, le dispositif de mise à la masse commune est une bague élastique conductrice 200.

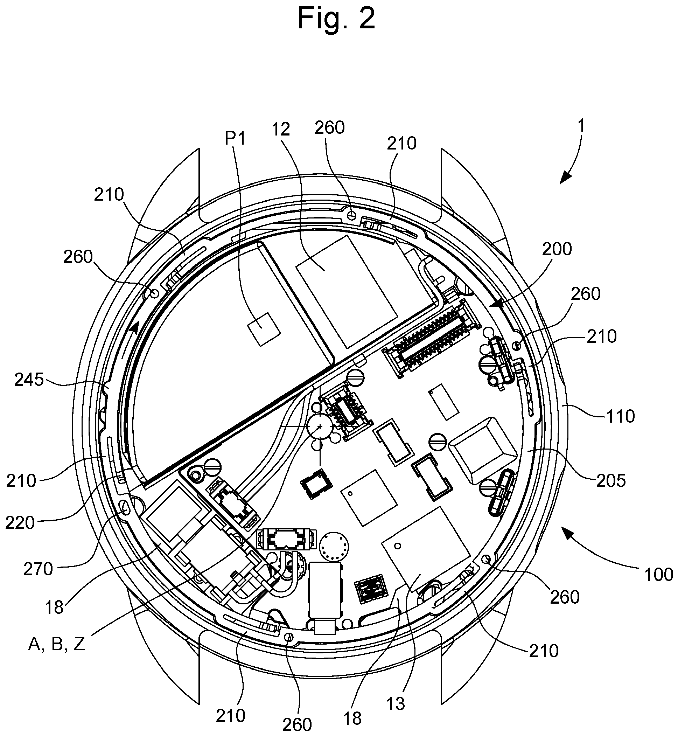

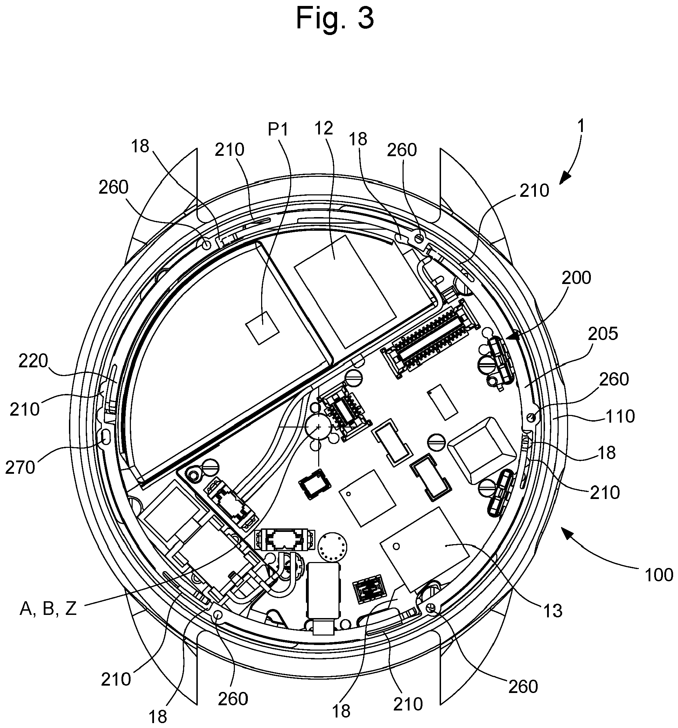

La figure 2 illustre plus particulièrement une vue de dessus d'une telle montre connectée 1 selon l'invention dans laquelle le mouvement horloger 10 est monté dans la boîte 100 et la bague élastique conductrice 200 est positionnée au-dessus du mouvement horloger 10 dans une position d'insertion (c'est-à-dire non verrouillée). À partir de cette position d'insertion de la bague élastique conductrice 200, une rotation de la bague élastique conductrice 200 de quelques degrés autour de l'axe Z permet d'arriver à une position verrouillée de la bague élastique conductrice, illustrée à la figure 3. Cette position verrouillée assure une mise à la masse commune des organes électriques du mouvement horloger, et notamment du module de communication 12.

Le sens de verrouillage est représenté à titre d'exemple dans le sens horaire par une flèche sur la bague élastique conductrice 200 illustrée à la figure 2. Toutefois, le sens de verrouillage peut également être dans le sens antihoraire.

La figure 3 illustre particulièrement la bague élastique conductrice 200 en position verrouillée et connectée électriquement aux différents connecteurs électriques 18 du mouvement horloger 10.

Une telle bague élastique conductrice 200 est avantageusement en matière métallique ou en matière polymère comportant une charge conductrice.

Une telle bague élastique conductrice 200 présente également une fonction d'amortisseur pour atténuer les effets des déplacements du mouvement d'horlogerie 10, et principalement les déplacements axiaux selon l'axe Z en cas de chocs sur la boîte de montre 100.La bague élastique conductrice 200 comporte un corps annulaire 205 d'axe central Z et des languettes de fixation 210 s'étendant selon une direction radiale, par rapport à la direction axiale Z.

Dans l'exemple de réalisation représenté, l'axe central A du mouvement d'horlogerie 10 est confondu avec l'axe central Z du corps annulaire 205 de la bague élastique conductrice 200. Toutefois, d'autres configurations sont possibles sans sortir du contexte de l'invention.

Les languettes de fixation 210 bague élastique conductrice 200 coopèrent avec des rainures à baïonnette 113 ménagées dans la carrure 110 pour former un système d'emboitage à baïonnette 300. Une tel système de verrouillage à baïonnette 300 permet de réaliser une mise à la masse commune, et optionnellement un emboitage, du mouvement horloger 10 par simple rotation relative de la bague élastique conductrice 200 par rapport à la carrure 110, autour de l'axe Z entre une position d'insertion (non verrouillée) illustrée à la figure 2 dans laquelle le mise à la masse commune n'est pas réalisée et une position verrouillée illustrée à la figure 3 dans laquelle le mouvement horloger est mis à la masse commune, et notamment le module de communication 12.

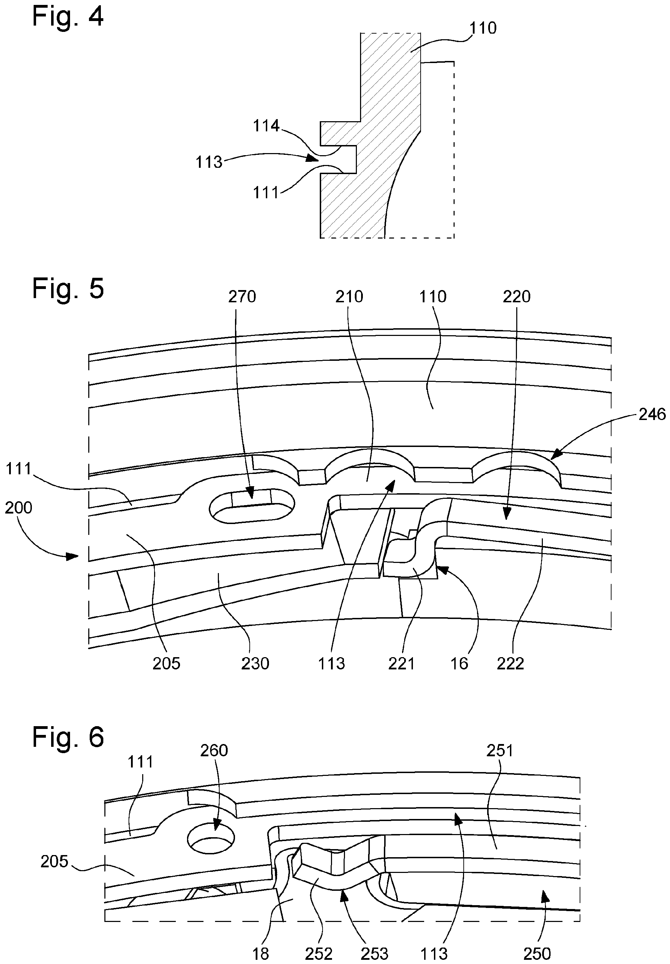

La figure 4 illustre une vue en coupe transversale de la carrure 110 illustrant plus particulièrement une portion présentant une rainure à baïonnette 113.

Pour recevoir la bague élastique conductrice 200, la carrure 110 comporte une surface d'appui 111 formant un épaulement circulaire s'étendant sur le pourtour intérieur de la carrure 110.

Plus particulièrement, lors de l'insertion de la bague élastique conductrice 200 dans la carrure 110, les languettes de fixation 210 viennent se poser au moins en partie sur la surface d'appui 111 de la carrure 110.

De manière générale, les termes « interne », « intérieur », « externe » et « extérieur » sont bien entendu à comprendre par rapport à la direction axiale Z illustrée à la figure 1 formant l'axe central bague élastique conductrice 200 ; un élément « interne » étant plus proche de l'axe central qu'un élément « externe ».

Selon une variante de réalisation, il est possible d'agencer une pluralité de surfaces d'appui 111 s'étendant sur des portions angulaires du pourtour intérieur de la carrure 110 et reparties uniformément, ou non, sur le pourtour intérieur de la carrure 110. Dans cette variante de réalisation, le nombre de surfaces d'appui 111 serait préférentiellement égal au nombre de languettes de fixation 210 de la bague élastique d'emboitage 200.

Dans l'exemple de réalisation illustré, la bague élastique conductrice 200 comporte six languettes de fixation 210. Toutefois, le nombre de languettes de fixation 210 n'est pas limité à six, il pourrait être égal à deux ou à un nombre arbitraire supérieur à deux. Les rainures à baïonnette 113 sont ménagées entre la surface d'appui 111 et une surface de maintien 114 faisant face à la surface d'appui 111.

Le nombre de rainures à baïonnette 113 est au moins égal au nombre de languettes de fixation 210.

Dans l'exemple de réalisation illustré, les rainures à baïonnette 113 sont agencées dans un plan parallèle au plan général P1 du mouvement horloger 10, c'est-à-dire un plan perpendiculaire à l'axe central A du mouvement d'horlogerie 10.

Dans une variante de réalisation, les rainures à baïonnette 113 peuvent être agencées pour comporter au moins une portion avec une inclinaison par rapport au plan général P1 du mouvement horloger 10, de manière à guider en rotation et en translation les languettes de fixation 210, et ainsi imposer un déplacement vertical, selon l'axe Z, en direction du mouvement horloger 10, de la bague élastique conductrice 200 lors du verrouillage par rotation autour de l'axe Z. Par exemple, les rainures à baïonnette 113 peuvent présenter au moins une portion avec une déclivité dirigée vers la glace de la boîte 100 (c'est-à-dire le côté opposé à l'insertion du mouvement d'horlogerie 10 et de la bague élastique d'emboitage 200).

L'espace entre la surface d'appui 111 et la surface de maintien 114 délimite la largeur de la rainure à baïonnette 113. Bien entendu, la largeur des rainures à baïonnette 113 peut être constante ou variable, avec par exemple une largeur maximale au niveau d'une portion d'extrémité d'insertion pour faciliter l'introduction des languettes de fixation 210, et une largeur minimale au niveau du fond des rainures à baïonnette 113, par exemple avec une largeur proche, ou correspondant, à l'épaisseur des languettes de fixation 210 pour assurer un maintien supplémentaire des languettes de fixation 210 par frottement ou friction.

Toutefois, comme nous le verrons par la suite, un tel arrangement n'est pas indispensable car la bague élastique conductrice 200 selon l'invention comporte plusieurs pattes conductrices élastiques 250 en contact avec le mouvement horloger 10 agissant élastiquement sur le mouvement horloger 10. Ainsi, les pattes conductrices élastiques 250 vont, par contre réaction élastique, tendre à maintenir les languettes de fixation 210 de la bague élastique conductrice 200 plaquées contre la surface de maintien 114 au niveau des rainures à baïonnette 113.

Les rainures à baïonnette 113 peuvent comporter un fond, ou un obstacle, par exemple une protubérance, pour former une butée angulaire de positionnement lors de la rotation de la bague élastique conductrice 200.

La bague élastique conductrice 200 comporte également au moins un détrompeur de montage 245 coopérant avec une cavité 246 ménagée dans la carrure 110 et s'étendant axialement le long de l'axe Z.

La bague élastique conductrice 200 comporte un organe de verrouillage angulaire 220 assurant un blocage en rotation de la position verrouillée de la bague élastique conductrice 200. L'organe de verrouillage angulaire 220 est configuré pour empêcher un desserrage ou un déverrouillage inopiné de la bague élastique conductrice 200, notamment en cas de chocs sur la boîte 100. Ainsi, un tel organe de verrouillage angulaire 220 permet de s'assurer que la mise à la masse commune du mouvement horloger 10 sera garantie même lors d'un choc subi par la montre connectée 1.

Selon une variante de réalisation, la bague élastique conductrice 200 comporte une pluralité d'organes de verrouillage angulaire 220.

La figure 5 illustre une portion de la bague élastique conductrice 200 comportant un organe de verrouillage angulaire 220.

Dans une première variante de réalisation, telle qu'illustrée, l'organe de verrouillage angulaire 220 présente une portion 222 raccordée au corps annulaire 205 de la bague élastique conductrice 200 au niveau d'une première extrémité. La portion 222 présente une extrémité libre 221, opposée à la première extrémité, qui est décalée axialement selon l'axe Z par rapport au corps annulaire 205. Ainsi, l'extrémité libre 221 fait saillie par rapport au corps annulaire 205 de la bague élastique conductrice 200, et est dirigée en direction du mouvement horloger 10.

L'organe de verrouillage angulaire 220 est configuré pour coopérer avec un doigt élastique de verrouillage 230 ménagé au niveau de la carrure 110 ou du mouvement horloger 10. Un tel doigt élastique de verrouillage 230 est conformé pour bloquer une rotation inverse de la bague élastique conductrice 200 lorsque celle-ci arrive en butée. La bague est alors en position verrouillée.

Dans une deuxième variante de réalisation, l'organe de verrouillage angulaire 220 peut être sous la forme d'une aspérité, par exemple un trou, au moins ménagée sur la surface inférieure du corps annulaire 205 (c'est-à-dire la surface destinée à être en regard du mouvement horloger 10). L'aspérité peut être traversante ou non. Le doigt élastique de verrouillage 230, ménagé au niveau de la carrure 110 ou du mouvement horloger 10, est alors conformé pour venir s'insérer au moins en partie dans l'aspérité de manière à bloquer une rotation inverse de la bague élastique conductrice 200 lorsque celle-ci arrive en butée. La bague est alors en position verrouillée.

Dans l'exemple de réalisation illustré, le doigt élastique de verrouillage 230 appartient au mouvement horloger 10, le mouvement horloger 10 étant bloqué en rotation dans la carrure 110 par des ergots, oreilles, ou moyens ad hoc, coopérant avec des logements ménagés au niveau du pourtour intérieur de la carrure 110. Ces moyens permettent également de former un organe détrompeur pour garantir le bon positionnement et la bonne orientation du mouvement horloger 10 dans la carrure 110 lors du montage du mouvement horloger 10 dans la boîte 100.

Comme illustré à la figure 5, l'organe de verrouillage angulaire 220 de la bague élastique conductrice 200 peut également former une butée angulaire de positionnement de la bague élastique conductrice 200 en venant au contact d'une surface de butée 16 de la carrure 110 ou du mouvement horloger 10, ce qui permet de s'affranchir de la réalisation d'une ou d'une pluralité de butées angulaires dans les rainures 113 de la carrure 110. Ainsi, la fabrication d'une telle carrure 110 est simplifiée.

L'organe de verrouillage angulaire 220 et le doigt élastique de verrouillage 230 forment des moyens de blocage par clippage ou verrouillage élastique de la bague élastique conductrice 200. Les moyens de blocage en rotation sont réversibles et déverrouillables au moyen d'une pointe ou d'un outil de montage/démontage permettant de contraindre le doigt élastique de verrouillage 230 et de le déformer élastiquement, ici selon une direction axiale parallèle à l'axe Z, pour libérer l'organe de verrouillage angulaire 220 et la rotation de la bague élastique conductrice 200, dans un sens de déverrouillage et de démontage de la bague élastique conductrice 200.

Le doigt élastique de verrouillage 230 fonctionne comme un élément débrayable. Il est configuré pour être non actif lors du montage de la bague élastique conductrice 200 et pour empêcher une rotation inverse de la bague une fois que celle-ci est en position verrouillée (position de fonctionnement de la montre connectée 1).

Plus particulièrement, dans la variante de réalisation illustrée, le doigt élastique de verrouillage 230 est conformé pour que, en position libre, son extrémité se positionne axialement au-dessus de la portion de l'extrémité libre 221 de l'organe de verrouillage angulaire 220 qui est la plus éloignée axialement du corps annulaire 205.

Le doigt élastique de verrouillage 230 peut être indifféremment en matière polymère ou en matière métallique.

La bague élastique conductrice 200 comporte des pattes conductrices configurées pour venir en appui sur les connecteurs électriques 18 du mouvement horloger 10. Par exemple, les connecteurs électriques 18 sont des pistes électriques ménagées en surface du mouvement horloger 10.

Optionnellement, les pattes conductrices 250 peuvent être conformées pour exercer un effort axial suffisant sur le mouvement horloger 10, selon un axe parallèle à l'axe Z du mouvement horloger 10, pour assurer son maintien dans la carrure 110 sans avoir recours à d'autres dispositifs ad hoc pour la réalisation de l'emboitage, comme par exemple des brides et des vis, ou encore un cercle d'emboitage.

Avantageusement, les pattes conductrices 250 sont des pattes conductrices élastiques.

De telles pattes conductrices élastiques 250 permettent de contraindre axialement le mouvement horloger 10 dans la carrure 110 pour le maintenir en position dans la carrure 110 en utilisation normale, tout en formant des moyens d'absorption des mouvements, notamment, axiaux du mouvement horloger 10 en cas de chocs sur la boîte 100.

La figure 6 illustre particulièrement une portion de la bague élastique d'emboitage 200 au niveau d'une des pattes conductrices élastiques 250.

Les pattes conductrices élastiques 250 comportent une portion élastique 251 raccordée au corps annulaire 205 de la bague élastique conductrice 200 au niveau d'une première extrémité. Cette portion élastique 251, par exemple en forme de lame, est destinée à se déformer élastiquement par rapport au corps annulaire 205 de la bague élastique d'emboitage 200. La portion élastique 251 comporte une extrémité libre de contact 252 présentant au moins une portion 253 décalée axialement par rapport au corps annulaire 205 de la bague élastique d'emboitage 200 et aux languettes de fixation 210, selon l'axe Z. L'extrémité libre de contact 252 fait donc saillie par rapport au corps annulaire 205 de la bague élastique d'emboitage 200 en direction du mouvement horloger 10.

Avantageusement, les extrémités libres de contact 252 des pattes conductrices élastiques 250 et l'extrémité libre 221 de l'organe de verrouillage angulaire 220 sont ménagées à des hauteurs différentes par rapport au plan formé par le corps annulaire 205.

Les extrémités libres de contact 252 des pattes conductrices élastiques 250 sont configurées pour venir en contact sur les différents connecteurs électriques 18 du mouvement horloger 10, lorsque la bague élastique conductrice 200 est en position verrouillée dans la carrure 110.

Préférentiellement, les pattes conductrices élastiques 250 sont configurées pour exercer un effort suffisant pour assurer le contact électrique et la mise à la masse commune du mouvement horloger 10, même en cas de chocs sur la boîte 100.

Préférentiellement, les extrémités libres de contact 252 des pattes conductrices élastiques 250 sont configurées exercer un effort axial parallèle à l'axe central Z sur le mouvement d'horlogerie 10 lorsque la bague élastique conductrice 200 est en position verrouillée dans la carrure 110.

La mise en contact électrique de l'ensemble des connecteurs électriques 18, via la bague élastique conductrice 200, est réalisée par rotation de la bague 200, la rotation emmenant et positionnant les différentes pattes conductrices élastiques 250 en contact électrique avec les connecteurs électriques 18. Ainsi, la mise à la masse commune du mouvement horloger 10 est réalisée lors du verrouillage de la bague élastique d'emboitage 200 en une seule opération de rotation.

Préférentiellement, les pattes conductrices élastiques 250 sont configurées pour contraindre le mouvement horloger 10 dans la carrure 110 pour le maintenir en position dans la carrure 110 en utilisation normale, tout en formant des moyens d'absorption ou d'amortissement atténuant les déplacements du mouvement d'horlogerie 10 en cas de choc sur la boîte de montre 100.

Dans l'exemple de réalisation illustré, les pattes conductrices élastiques 250 permettent de contraindre axialement le mouvement d'horlogerie 10 selon l'axe Z pour atténuer les effets des déplacements axiaux du mouvement horloger 10 selon ce même axe.

Les connecteurs électriques 18 peuvent être ménagés en retrait par rapport à une surface supérieure du mouvement horloger 10, configurées pour recevoir et loger les pattes conductrices élastiques 250. Les connecteurs électriques 18 en retrait peuvent ainsi donner une indication sur le positionnement de la bague élastique conductrice 200 et/ou participer au verrouillage en position verrouillée de la bague élastique conductrice 200.

Les pattes conductrices élastiques 250 logées dans ces connecteurs électriques 18 en retrait peuvent également assurer, au moins en partie, un blocage des déplacements du mouvement horloger 10 dans le plan P1 et/ou amortir ou atténuer les déplacements du mouvement horloger 10 dans le plan P1.

La bague élastique conductrice 200 comporte également une empreinte 260, préférentiellement au moins deux, configurées pour coopérer avec des éléments en saillie 460, tels que des protubérances, tétons, ergots, d'un outil de montage 400 pour le montage (verrouillage) et le démontage (déverrouillage) de la bague élastique conductrice 200.

Dans l'exemple de réalisation représenté, la bague élastique comporte cinq empreintes 260.

Les empreintes 260 peuvent être des trous, des encoches, etc. Elles peuvent être avec des formes identiques ou différentes.

L'outil de montage 400 comporte un corps 410 permettant de faciliter la manutention, le verrouillage ainsi que le déverrouillage de la bague élastique conductrice 200.

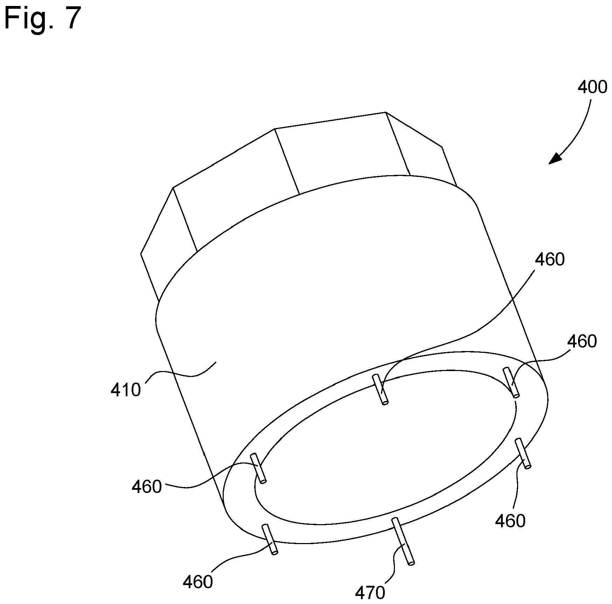

La figure 7 illustre schématiquement un tel outil de montage 400 selon l'invention pour le montage de la bague élastique conductrice, la mise à un potentiel commun du mouvement horloger 10, et optionnellement l'emboitage du mouvement horloger 10 dans la carrure 110.

L'outil de montage 400 peut être sous la forme d'une douille facilement préhensible par un horloger présentant au moins un téton 460 configuré pour s'insérer dans ladite au moins empreinte 260 de la bague élastique conductrice200.

Dans l'exemple de réalisation représenté, l'outil de montage 400 comporte cinq tétons 460 configurés pour s'insérer dans les cinq empreintes 260 de la bague élastique conductrice 200.

La bague élastique conductrice 200 comporte en outre une empreinte de démontage 270 configurée pour recevoir et permettre le passage d'un téton de déverrouillage 470 de l'outil de montage 400. Une telle empreinte de démontage 270 présente préférentiellement une forme spécifique différente des autres empreintes 260, notamment pour faciliter son repérage par rapport aux autres empreintes. Bien évidemment d'autres moyens peuvent être utilisés pour repérer facilement l'empreinte de démontage 270 des autres empreintes 260 servant à l'entrainement en rotation de la bague élastique conductrice 200.

L'empreinte de démontage 270 est par exemple un trou ou une encoche de forme oblongue, alors que les empreintes 260 peuvent être de forme circulaire.

L'empreinte de démontage 270 est ménagée au niveau du corps annulaire 205 de manière à être positionnée au-dessus du doigt élastique de verrouillage 230 lorsque la bague élastique conductrice 200 est en position verrouillée dans la carrure 110.

Le téton de déverrouillage 470 de l'outil de montage 400 est configuré pour débrayer le doigt élastique de verrouillage 230 lorsque l'outil de montage 400 est positionné sur la bague élastique conductrice. Le téton de déverrouillage 470 est configuré pour appuyer et déformer élastiquement le doigt élastique de verrouillage 230 de manière à le dégager de l'organe de verrouillage angulaire 220 ou de la trajectoire de l'organe de verrouillage angulaire 220, autorisant ainsi une rotation inverse de la bague élastique conductrice 200.

Ainsi, une fois l'outil de montage 400 en position sur la bague élastique conductrice 200, il est facile de démonter la bague élastique conductrice 200 par simple rotation dans le sens inverse du sens de montage, celui-ci entrainant la bague élastique conductrice 200 en rotation par la coopération des tétons 460 et des empreintes 260.

Avantageusement, dans la position d'insertion de la bague élastique conductrice 200, c'est-à-dire dans la position dans laquelle la bague élastique d'emboitage 200 est juste posée sur la surface d'appui 111 de la carrure 110 (les languettes de fixation 210 n'étant pas engagées dans les rainures à baïonnette 113), les pattes conductrices élastiques 250 ne sont pas en contact électrique avec les connecteurs électriques 18 du mouvement horloger. Ainsi, les pattes conductrices élastiques 250 sont en contact avec les connecteurs électriques 18 uniquement lorsque la bague élastique conductrice 200 est verrouillée dans la carrure 110.

Toutefois, les pattes conductrices élastiques 250 peuvent être en contact avec d'autres parties non conductrices du mouvement horloger 10 en position d'insertion.

Avantageusement, les pattes conductrices élastiques 250 exercent un effort, notamment axial, sur mouvement horloger 10 uniquement lorsque la bague élastique d'emboitage 200 est en position verrouillée.

### Procédé de mise à la masse commune d'un mouvement horloger d'une montre connectée selon l'invention

Pour réaliser la mise à la masse commune du mouvement horloger 10, une première opération consiste à introduire le mouvement horloger 10 dans la carrure 110 de manière à faire correspondre les différents éléments d'indexation du mouvement 10 et de la carrure 110, si présent. Ainsi, la mise en place du mouvement horloger 10 peut être réalisée avec une position angulaire prédéfinie du mouvement horloger 10 par rapport à la carrure 110. Les différents éléments d'indexation maintiennent en rotation le mouvement horloger 10 dans la carrure 110, par rapport à l'axe Z.

Dans l'exemple de réalisation illustré, le mouvement horloger 10 est inséré par le côté fond de boîte.

Ensuite, une deuxième opération consiste à introduire la bague élastique conductrice 200 au-dessus du mouvement horloger 10 jusqu'à ce que les languettes de fixation 210 viennent en appui sur la surface d'appui 111 de la carrure 110.

Selon une variante, la bague élastique conductrice 200 peut être déposée directement sur le mouvement horloger 10.

Une troisième opération consiste à imprimer une rotation de la bague élastique conductrice 200, dans un sens de verrouillage déterminé, par exemple dans le sens horaire, de sorte que les languettes de fixation 210 s'insèrent dans les rainures à baïonnette 113, jusqu'à atteindre une position de butée via la ou les butées angulaires de positionnement. La bague élastique conductrice 200 est alors en position verrouillée.

Dans l'exemple de réalisation décrit précédemment, l'organe de verrouillage angulaire 220 de la bague élastique conductrice 200 coopère avec une surface de butée du mouvement d'horlogerie 10 pour former une butée angulaire de positionnement de la bague élastique d'emboitage 200. Dans l'exemple de réalisation décrit précédemment, l'organe de verrouillage angulaire 220 de la bague élastique conductrice 200 coopère avec la surface de butée 16 du mouvement horloger 10 pour former la butée angulaire de positionnement de la bague élastique conductrice 200.

Lors de la rotation, l'opérateur peut devoir surmonter un effort de résistance dû à la déformation élastique d'une ou de plusieurs pattes conductrices élastiques 250 s'engageant sur la surface de mouvement horloger 10.

Par exemple, lors de la rotation, l'opérateur peut devoir surmonter un effort de résistance dû à la déformation élastique d'une ou de plusieurs pattes conductrices élastiques 250 venant au contact du mouvement horloger 10 lors de la rotation de la bague 200, et/ou surmonter l'effort de résistance par frottement de la ou des pattes conductrices élastiques 250 en contact avec le mouvement horloger 10.

Il peut être également nécessaire que l'opérateur imprime un effort axial selon l'axe Z sur la bague élastique conductrice 200 de manière à contraindre élastiquement les pattes conductrices élastiques 250 pour pourvoir engager les languettes de fixation 210 dans les rainures 113.

La rotation de la bague élastique conductrice 200 est préférentiellement réalisée au moyen de l'outil de montage 400 selon l'invention décrit précédemment. Un tel outil d'emboitage 400 permet de faciliter la manutention d'une telle bague élastique conductrice 200 selon l'invention.

A cet effet, le procédé peut comporter une étape préalable consistant à positionner l'outil de montage 400 sur la bague élastique conductrice 200 en faisant correspondre les différents tétons 460, 470 de l'outil de montage 400 avec les différents empreintes 260, 270 respectives de la bague élastique conductrice 200.

Lors de la rotation de la bague élastique conductrice l'extrémité libre 221 de l'organe de verrouillage angulaire 220 vient au contact du doigt élastique de verrouillage 230, le déformant élastiquement progressivement au fur et à mesure de la rotation de la bague 200 ou dès le positionnement de la bague élastique conductrice 200 au-dessus du mouvement horloger 10. Lorsque la bague élastique conductrice 200 arrive dans sa position angulaire finale (position en butée), le doigt élastique de verrouillage 230 n'est plus contraint, celui-ci pouvant revenir dans sa position libre de repos, de manière à coopérer avec l'organe de verrouillage angulaire 220, empêchant ainsi la rotation inverse de la bague élastique conductrice 200. La bague élastique conductrice 200 est alors verrouillée en position.

Dans l'exemple de réalisation représenté, le doigt élastique de verrouillage 230 se positionne axialement (selon l'axe Z) en regard ou au-dessus de l'organe de verrouillage angulaire 220, empêchant ainsi la rotation inverse de la bague élastique conductrice 200.

L'organe de verrouillage angulaire 220 permet, en coopération avec le doigt élastique 230 du mouvement horloger 10, de bloquer la position verrouillée de la bague et de prévenir tout démontage ou desserrage inopiné et involontaire de la bague élastique conductrice 200, par exemple sous l'effet de vibrations, de cycles de dilatation successifs, de chocs, par une utilisation malencontreuse du porteur, ou autre.

Le passage de la position d'insertion à la position de verrouillage de la bague élastique conductrice 200, et inversement, est réalisé en effectuant une rotation de l'ordre de 20°.

Une fois en position verrouillée, les différentes pattes conductrices élastiques 250 sont en contact électrique avec les différents les connecteurs électriques 18 du mouvement horloger 10.

Avantageusement, le verrouillage en rotation de la bague élastique conductrice assure également le maintien du mouvement horloger 10 dans la carrure 110.

Le démontage de la bague élastique conductrice nécessite de préférence l'utilisation d'un outil de montage 400 pour désengager le doigt élastique 230 et libérer la rotation de l'organe de verrouillage angulaire 220 dans le sens de déverrouillage.

Préférentiellement, l'outil mentionné lors du montage de la bague élastique conductrice 200 est également utilisé pour le déverrouillage et le démontage de la bague élastique conductrice 200. Comme décrit précédemment, l'outil 400 comporte un téton de déverrouillage 470 configuré pour coopérer avec le doigt élastique de verrouillage 230 et le contraindre en position axiale par rapport à l'axe Z, lorsque l'outil est maintenu en position sur la bague élastique conductrice 200 par l'opérateur.

Préférentiellement, le procédé de mise à la masse commune du mouvement horloger 10 selon l'invention permet d'emboiter le mouvement horloger 10 dans la carrure 110.

De manière générale, l'invention a été décrite avec des opérations réalisées par un opérateur. Toutefois, l'invention est également applicable avec un automate ou un robot, de sorte que le procédé de mise à la masse commune d'un mouvement horloger selon l'invention peut être un procédé manuel ou un procédé automatisé.

## Revendications

1. Montre connectée (1) comportant une boîte (100) présentant une carrure (110), un mouvement horloger (10) logé dans un espace interne (115) délimité par ladite carrure (110), ledit mouvement horloger (10) comportant une unité de traitement (13) et un module de communication (12) reliés électriquement à des connecteurs électriques (18) que comporte le mouvement horloger (10), ladite montre connectée (1) étant **caractérisée en ce qu'**elle comporte un dispositif de mise à la masse commune formé par une bague élastique conductrice (200) comportant un corps annulaire (205) d'axe central (Z), des languettes de fixation (210) portées par ledit corps annulaire (205) et coopérant avec ladite carrure (110) pour former un système de verrouillage à baïonnette (300) par rotation relative de la bague élastique conductrice (200) par rapport à la carrure (110), autour de l'axe central (Z), entre une position d'insertion et une position verrouillée, et **en ce que** ladite bague élastique conductrice (200) comporte des pattes conductrices (250) configurées pour être en contact électrique avec les conducteurs électriques (18) du mouvement horloger (10) lorsque la bague élastique conductrice (200) est en position verrouillée dans la carrure (110).

2. Montre connectée (1) selon la revendication précédente **caractérisée en ce que** les conducteurs électriques (18) sont des pistes électriques ménagées en surface dudit mouvement horloger (10) et **en ce que** les pattes conductrices (250) de la bague élastique conductrice (200) sont en appui sur les pistes électriques lorsque la bague élastique conductrice (200) est en position verrouillée dans la carrure (110).

3. Montre connectée (1) selon l'une des revendications précédentes **caractérisée en ce que** les pattes conductrices (250) sont des pattes conductrices élastiques.

4. Montre connectée (1) selon la revendication précédente **caractérisée en ce que** les pattes conductrices (250) sont configurées pour exercer un effort axial parallèlement à l'axe central (Z) sur le mouvement horloger (10) par déformation élastique des pattes conductrices (250) au moins lorsque ladite bague élastique d'emboitage (200) est en position verrouillée dans la carrure (110).

5. Montre connectée (1) selon la revendication précédente **caractérisée en ce que** lesdites pattes conductrices (250) sont configurées pour que l'effort axial exercé sur le mouvement horloger (10) assure un maintien dudit mouvement horloger (10) dans ladite carrure (110), préférentiellement selon une direction axiale parallèle à l'axe central Z.

6. Montre connectée (1) selon l'une des revendications 3 à 5 **caractérisée en ce que** lesdites pattes conductrices (250) sont configurées pour former des moyens amortisseurs du mouvement horloger (10) en cas de chocs subis par la montre connectée, préférentiellement selon une direction axiale parallèle à l'axe central Z.

7. Montre connectée (1) selon l'une des revendications précédentes **caractérisée en ce que** les languettes de fixation (210) s'étendent radialement par rapport à l'axe central (Z).

8. Montre connectée (1) selon l'une des revendications précédentes **caractérisée en ce que** chacune desdites pattes conductrices (250) comporte une portion élastique (251) reliée au corps annulaire (205) et conformée pour se déformer élastiquement.

9. Montre connectée (1) selon la revendication précédente, **caractérisée en ce que** ladite portion élastique (251) comporte une extrémité libre de contact (252) présentant au moins une portion (253) décalée axialement, selon l'axe central (Z), par rapport au corps annulaire (205), ladite extrémité libre de contact (252) étant en contact électrique avec un des conducteurs électriques (18) du mouvement horloger (10), lorsque ladite bague élastique conductrice (200) est en position verrouillée dans la carrure (110).

10. Montre connectée (1) selon l'une des revendications précédentes **caractérisée en ce que** la bague élastique conductrice (200) comporte un organe de verrouillage angulaire (220) coopérant avec un doigt élastique de verrouillage (230) porté par le mouvement horloger (10) ou par la carrure (110), pour assurer un blocage en rotation de ladite bague élastique conductrice (200) une fois en position verrouillée par clippage élastique.

11. Montre connectée (1) selon la revendication précédente **caractérisée en ce que** l'organe de verrouillage angulaire (220) coopère avec une surface de butée du mouvement horloger (10) ou de la carrure (110) pour former une butée angulaire de positionnement de la bague élastique conductrice (200).

12. Montre connectée (1) selon l'une des revendications précédentes **caractérisée en ce que** la carrure (110) comporte une surface d'appui (111) pour recevoir en appui lesdites languettes de fixation (210) de la bague élastique conductrice (200).

13. Montre connectée (1) selon l'une des revendications précédentes **caractérisée en ce que** la carrure (110) comporte des rainures à baïonnette (113), lesdites rainures à baïonnette (113) coopérant avec lesdites languettes de fixation (210) pour former le système de verrouillage à baïonnette (300).

14. Montre connectée (1) selon l'une des revendications précédentes **caractérisée en ce que** ladite bague élastique conductrice (200) comporte un détrompeur de montage (245).

15. Montre connectée (1) selon l'une des revendications précédentes **caractérisée en ce que** ladite bague élastique conductrice (200) comporte au moins une empreinte (260, 270) présentant une forme adaptée pour coopérer avec un outil de montage (400).

16. Montre connectée (1) selon l'une des revendications précédentes **caractérisée en ce que** ladite bague élastique conductrice (200) comporte une première empreinte (260) configurée pour assurer la rotation de la bague élastique conductrice (200) et une deuxième empreinte (270) configurée pour assurer le déverrouillage de ladite bague élastique conductrice (200), chacune des empreintes (260, 270) présentant une forme adaptée pour coopérer avec un outil de montage (400).

17. Montre connectée (1) selon l'une des revendications précédentes **caractérisée en ce que** la bague élastique conductrice (200) est réalisée en matière métallique ou en matière polymère avec une charge conductrice

18. Outil de montage (400) pour la mise à la masse commune d'un mouvement d'horlogerie (10) d'une montre connectée (1) selon l'une des revendications précédentes, **caractérisé en ce qu'**il comporte au moins un élément en saillie (460) configuré pour coopérer avec au moins une empreinte (260) de la bague élastique conductrice (200).

19. Outil de montage (400) selon la revendication précédente **caractérisé en ce qu'**il comporte des éléments en saillie (460) configurés pour coopérer avec une pluralité d'empreintes (260) de ladite bague élastique conductrice (200), lesdits éléments en saillie (460) assurant un entrainement en rotation de ladite bague élastique conductrice (200) lors de la rotation dudit outil de montage (400).

20. Outil d'emboitage (400) selon la revendication précédente et la revendication 10 **caractérisé en ce qu'**il comporte un téton de déverrouillage (470) configuré pour débrayer ledit doigt élastique de verrouillage (230) lorsque ledit outil de montage (400) est en position sur la bague élastique conductrice (200) de manière à autoriser son déverrouillage dudit mouvement horloger (10).

21. Procédé de mise à la masse commune d'un mouvement horloger (10) électronique ou électromécanique d'une montre connectée (1) selon l'une des revendications précédentes, **caractérisé en ce qu'**il comporte :
- une étape d'introduction dudit mouvement horloger (10) dans la carrure (110) de la boîte (100) ;
- une étape d'introduction du dispositif de mise à la masse commune formé par ladite bague élastique conductrice (200) par-dessus le mouvement d'horlogerie ;
- une étape de mise à la masse commune des connecteurs électriques (18) du mouvement horloger (10) durant laquelle la bague élastique conductrice (200) est engagée en rotation autour de l'axe central (Z) jusqu'à atteindre une position verrouillée, la rotation engageant lesdites languettes de fixation (210) dans une pluralité de rainures à baïonnette (113) que comporte la carrure (110), lesdites pattes conductrices (250) venant en contact électrique avec les conducteurs électriques (18) du mouvement horloger (10) lorsque la bague élastique conductrice (200) est en position verrouillée.
